# EUROPÄISCHE PATENTSCHRIFT

(11) **EP 1 005 776 B1**
(45) Veröffentlichungstag und Bekanntmachung des Hinweises auf die Patenterteilung: **08.01.2003**
(21) Anmeldenummer: 98947348.3
(22) Anmeldetag: 27.07.1998
(51) Int. Cl.: H04Q 11/04

(54) **VERFAHREN ZUM ÜBERTRAGEN VON NUTZDATEN, DIE UNTERSCHIEDLICHEN ANWENDUNGEN ZUORDENBAR SIND**
METHOD FOR TRANSMITTING USER DATA THAT CAN BE ALLOCATED TO DIFFERENT APPLICATIONS
PROCEDE POUR TRANSMETTRE DES DONNEES UTILES POUVANT ETRE AFFECTEES A DIFFERENTES APPLICATIONS

(30) Priorität: 21.08.1997 DE 19736438
(43) Veröffentlichungstag der Anmeldung: 07.06.2000
(73) Patentinhaber: SIEMENS AKTIENGESELLSCHAFT, 80333 München (DE)
(72) Erfinder: FRAAS, Wolfgang, D-82515 Wolfratshausen (DE); HÜNLICH, Klaus, D-85467 Neuching (DE)
(86) Internationale Anmeldenummer: DE9802116
(87) Internationale Veröffentlichungsnummer: WO99011091

(56) Entgegenhaltungen:
- EP-A- 0 702 474
- BALDWIN J H ET AL: "AAL-2 - A NEW ATM ADAPTION LAYER FOR SMALL PACKET ENCAPSULATION ANDMULTIPLEXING" BELL LABS TECHNICAL JOURNAL, Bd. 2, Nr. 2, 21. März 1997, Seiten 111-131, XP000695171
- HUNT R: "ATM - PROTOCOLS AND ARCHITECTURE" COMPUTER COMMUNICATIONS, Bd. 19, Nr. 6/07, 1. Juni 1996, Seiten 597-611, XP000599910

## Beschreibung

Die Erfindung betrifft ein Verfahren zum Übertragen von Nutzdaten, die unterschiedlichen Anwendungen zuordenbar sind, zwischen einer A-Seite und B-Seite einer Übertragungsstrecke, wobei vor der Datenübertragung zwischen der A-Seite und der B-Seite in einer Signalisierungsphase per Signalisierung eine ATM-Verbindung aufgebaut wird, wobei den einzelnen Anwendungen zugeordnete Daten jeweils innerhalb eines mehrere ATM-Zellen enthaltenden ATM-Anpassungsschichtrahmens in den ATM-Zellen enthaltenen Substrukturen übertragen werden und die Nutzdaten der Substrukturen jeweils abhängig von empfängerseitigen Anwendungszuordnungen unterschiedlich weiterleitbar sind.

Wesentliche Bedeutung kommt dabei der Schnittstelle zu, die den Zugang zum ATM-Netz ermöglicht, der ATM-Anpassungsschicht, die auch ATM-Adaption-Layer oder AAL genannt wird.

Die AAL ist die Schnittstelle zwischen ATM und den höheren Protokollschichten. Sie verbirgt die ATM-spezifischen Eigenschaften der Übertragung vor den höheren Schichten und paßt die ATM-Schicht (bidirektional) an diese an. Dazu werden die Daten der höheren Schichten zusammen mit den Protokollinformationen der AAL-Schicht in die Informationsfelder der ATM-Zellen gepackt und als Nutzinformation, auch Payload genannt, übertragen. Da die AAL für die Anpassung der Dienste höherer Schichten an ATM zuständig ist, spielt sie im Netz bei der Übertragung selbst keine Rolle. Die AAL ist für den Anwender da. Sie stellt die Verbindung zwischen Teilnehmer und Netz her.

Bei immer mehr Anwendungen werden beim Teilnehmer anstelle spezieller Prozessoren Treiberprogramme eingesetzt, welche ohnehin vorhandene, leistungsfähige Prozessoren in Computern nutzen. Dies sollte auch geschehen, um die Anpassung der zu übertragenden Daten an die Netzbelange zu realisieren. Dies führte u.a. dazu, die gemäß dem internationalen Standard ITU-T I.362 spezifizierte, zunächst nur zur Datenübertragung sowie bei der Übertragung von Signalisierungsdaten vorgesehene AAL-5 auch im Sprachbereich zu verwenden.

Um die von unterschiedlichen Diensten an die AAL-Schicht gestellten Anforderungen zu erfüllen, ist diese in Unterschichten, sogenannte AAL-Sublayer mit jeweils verschiedenen Aufgaben unterteilt.

Gemäß dem internationalen Standard ITU-T I.362 ist die Möglichkeit einer weitere Untergliederung ausdrücklich möglich. Derzeit sind die Funktionen folgendermaßen festgelegt:
Segmentation und Reassembly (SAR)
   - Anpassung an die ATM-Struktur durch entsprechende Segmentierung der zu übertragenden Daten in eine auf das verfügbare Informationsfeld der ATM-Zelle abgestimmte Größe
   - Zurückgewinnung des Informationsinhaltes der Informationsfelder von ATM-Zellen für die höheren Schichten Convergence Sublayer (CS)
   - Anpassung an die Erfordernisse der jeweiligen Dienste durch Bereitstellung der servicespezifischen Eigenschaften des AAL

Da zur Realisation der servicebedingten Eigenschaften in den Datenstrom von den höheren Schichten AAL-spezifische Protokollelemente eingefügt werden müssen, beeinflußt die Funktion CS die Arbeitsweise des SAR.

Die Forderungen die von einzelnen Diensten an die Übertragung gestellt werden, lassen sich in Klassen, sogenannten Classes of Services, zusammenfassen. Die Forderungen sind in ITU-T I.362 wiedergegeben.

Bei der Einteilung in Diensteklassen sind es insbesondere die folgenden Gesichtspunkte, die zu berücksichtigen sind:
Ist "timing relation" zwischen Ursprung (Source) und Ziel (Destination) erforderlich oder nicht;
ist die Bitrate konstant oder variable; und
wird ein Verbindungsbezogener Dienst (connection-oriented) oder ein verbindungsloser Dienst (connectionless) vorgesehen.

Wie aus dem Intorial: 'ATM. protocols and architecture' (Hunt, Computer Communication, vol.19, 1-6-1996) zu entnehmen ist, hat AAL-5 gegenüber anderen AAL den Vorteil eines geringeren Protokoll Overhead. Außerdem bietet AAL-5 bessere Möglichkeiten, Zellverluste bei Verwendung von CRC Mechanismen über den gesamten Informationsinhalt zu erkennen. Bei der Sprachübertragung erfüllt AAL-5 die meisten Serviceanforderungen, nämlich Synchronisation von Ursprung und Ziel (Timing Relation between source and destination), konstante Bitrate CBR (Constant Bitrate), Variable Bitrate VBR, verbindungsorientierter Dienst, verbindungsrohre Dienst, geringer Protokollanteil am Nutzdatenanteil (Payload) der ATM-Zellen (Protocol Overhead), günstiges Verhalten bezüglich "Binary Alignement". Lediglich die durch die Zellenfüllzeit bedingte Verzögerung bei Übertragung komprimierter Sprachdaten ist ungünstig. Solange es sich um die Übertragung von unkomprimierten ISDN Daten handelt, spielen die Zellenfüllzeiten keine besondere Rolle. Im Bereich des Mobilfunks ist jedoch Datenkompression notwendig um die beschränkte Funkfrequenzbandbreite optimal nutzen zu können. Kompressionsfaktoren von 10 führen dazu, daß die Füllzeiten für eine ATM-Zelle auf bis zu 60 msec ansteigen. Es ist daher sinnvoll, im Falle des Mobilfunks und ggf. auch für andere niedrigbitratige Anwendungen wie ATM mehr als einen Kanal gebündelt über einen VCI zu übertragen. Hierzu muß eine geeignete Substruktur definiert werden, die in ATM-Anpassungsschichten wie z.B. AAL-5 eingebettet werden kann.

Auf AAL Ebene sollte hierzu ein ganzzahliges Vielfaches an ATM-Zellen als Rahmen, beispielsweise auf der Basis von AAL-5 gewählt werden. AAL-5 würde hierbei ein Benutzen der darin enthaltenen Sicherungselemente ermöglichen.

Aus der Definition von AAL-5 läßt sich ableiten, daß eine Substruktur durchaus auch größer gewählt werden kann, als das eigentliche Zellformat und daß sie die Grenzen zwischen zwei (oder mehreren) Zellen überlappen können muß.

Aus der Tatsache daß im Falle des Mobilfunks Daten komprimiert werden und damit kein konstanter Datenstrom mehr vorliegt, ergibt sich die Forderung nach der Möglichkeit verschieden große Strukturelemente in der Substruktur ebenso definieren zu können wie Strukturelemente deren Größe sich mit der Zeit ändert.

Außerdem sollte Möglichkeit bestehen, die Strukturelemente alle gleich groß wählen zu können um so CBR zu unterstützen. Auch sollte die Möglichkeit bestehen, Elemente zur Unterstützung der Synchronisierung mit zu übertragen.

Erstrebenswert wäre auch, Datenströme mit verschiedenen Adressaten innerhalb eines AAL-Rahmens übertragen zu können.

Daher müßten bei Sender und Empfänger zusätzliche Eigenschaften der Strukturelemente bekannt sein, nämlich die Größe des AAL-Rahmens, die Länge eines Strukturelementes, die Anzahl der Strukturelemente in einem virtuellen Kanal, die Zuordnung einzelner Strukturelemente zu Adressen, eine Information bezüglich Synchronität bzw. Asynchronität und eine Information bezüglich der Konstanz der Bitrate, also CBR/VBR. Wenn diese Information in bekannter weise innerhalb von AAL-Rahmen übertragen wird, wird der Protocol Overhead stark erhöht.

Aufgabe der vorliegenden Erfindung ist es, ein Verfahren zum Übertragen von unterschiedlichen Anwendungen zuordenbaren Nutzdaten zwischen einer A-Seite und B-Seite einer Übertragungsstrecke anzugeben, wobei vor der Datenübertragung zwischen der A-Seite und der B-Seite in einer Signalisierungsphase per Signalisierung eine ATM-Verbindung aufgebaut wird und wobei den einzelnen Anwendungen zugeordnete Daten jeweils innerhalb eines mehrere ATM-Zellen enthaltenden ATM-Anpassungsschichtrahmens in den ATM-Zellen enthaltenden Substrukturen übertragen werden, ohne daß der Protocol Overhead stark erhöht wird.

Erfindungsgemäß wird dies dadurch gelöst, daß die A-seitige und die B-seitige Zuordnung der Substrukturen eines ATM-Anpassungsschichtrahmens in der Signalisierungsphase per Signalisierung festgelegt werden.

Dies bedeutet, daß die Adreßinformation der einzelnen Substrukturen im Rahmen der Signalisierung ausgetauscht werden. Der Protocol Overhead wird als Folge davon, da die Adreßinformationen nur im Rahmen des Verbindungsaufbaus übertragen zu werden brauchen, und weitere Information nur im geringen Umfang zu übermitteln ist, im Mittel nur sehr geringfügig erhöht.

Außerdem können zusätzliche Informationen bezüglich des Formats der Substrukturen in der Signalisierungsphase per Signalisierung festgelegt werden.

Wenn beispielsweise in einer Weiterbildung der Erfindung die Anzahl der ATM-Zellen, die ein ATM-Anpassungsschichtrahmen enthält, in der Signalisierungsphase per Signalisierung festgelegt wird, braucht auch diese Information bei bestehender Verbindung nicht übermittelt zu werden.

Beispielsweise kann in einer Ausgestaltungsform eines erfindungsgemäßen Verfahrens in der Signalisierungsphase per Signalisierung festgelegt werden,
ob die einzelnen Substrukturen gleich groß sind oder nicht.

Vorzugsweise wird bei erfindungsgemäßen Verfahren der Beginn der ersten Substruktur innerhalb eines Rahmen durch den Rahmenbeginn festgelegt.

Im Falle unterschiedlich großer Substrukturelemente gibt in besonders günstigen Ausgestaltungen eines erfindungsgemäßen Verfahrens das erste Element jedes Substrukturelementes die Länge des Substrukturelementes an, dem es zugehört und damit, wann die nächste Substruktur beginnt.

Vorzugsweise wird im Falle unterschiedlich großer Substrukturen die Länge eines Substrukturelementes durch den Wertebereich *l* eines Längenindikatorfeldes festgelegt.

Bei *l* = 0 liegt kein Substrukturelement mehr vor. Die maximale Länge, die ein Substrukturelement annehmen kann, ist damit durch*l*ₘₐₓ - 1 festgelegt. Ist das Längenindikatorfeld acht Bit, also ein Oktett lang, so können bis zu 256 Oktette durchnumerieret werden. Damit kann ein AAL-5-Rahmen im Falle flexibler Strukturelemente aus bis zu max. 5 ATM-Zellen bestehen.

Der ATM-Anpassungsschichtrahmen kann vorzugsweise dem AAL-5-Rahmen gemäß ATM-Form entsprechen.

Eine Verbindung zwischen der A-Seite und der B-Seite kann bezüglich der Substrukturen eines ATM-Anpassungsschichtrahmens bidirektional sein.

Eine besonders günstige Ausgestaltung eines erfindungsgemäßen Verfahrens sieht vor, falls bei Verwendung unterschiedlich großer Substrukturen innerhalb einer Substruktur keine Netzdaten zu übertragen sind, die Länge der Substruktur um den für Nutzdaten vorgesehenen Teil zu kürzen.

Eine Substruktur kann sich bedarfsweise auch über den Nutzdatenbereich zweier aneinander grenzender ATM-Zellen erstrecken und somit den Kopfinformationsbereich einer ATM-Zelle umschließen.

Im folgenden wird die Erfindung anhand eines Beispiels zusammengefaßt.

Als Struktur eines AAL-5-Rahmens wird eine ganze Zahl von ATM-Zellen verwendet. Die Anzahl der Zellen pro Struktur ist bei der Signalisierung im Rahmen des Verbindungsaufbaus auszuhandeln. Im Falle von Strukturelementen flexibler Länge sollte die Länge eines Rahmens 5 nicht überschreiten, wie weiter unten näher erläutert wird.

Ob ein festes oder flexibles Format gewählt werden soll, wird durch Signalisierung vereinbart. Das gleiche gilt für die Anzahl der in einem Rahmen zu übertragenden Strukturelemente, d.h. Substrukturen.

Substrukturen können innerhalb eines AAL-5-Rahmens von einer ATM-Zelle in die nächste ATM-Zelle überlappen.

Die Zuordnung einzelner Substrukturen zu Adressen wird durch Signalisierung vereinbart. Eine zusätzliche Belastung der Substrukturen durch den Transport von Addressierungsdaten wird damit vermieden.

Damit Strukturelemente variabler Länge miteinander verkettet werden können, enthält jedes Element als erstes Oktett einen Zeiger (Pointer), der auf den Beginn des nachfolgenden Elementes zeigt. Dieser Zeiger hat die Länge von einem Oktett, so daß bis zu 256 Oktetts durchnumerieret werden können. Damit kann ein AAL-5-Rahmen im Falle flexibler Strukturelemente aus bis zu max. 5 Zellen bestehen. Diese Einschränkung ist auch sinnvoll, weil eine ggf. verlorengegangene Verpointerung mit Beginn des nächsten AAL-5-Rahmens sofort wiedergewonnen werden kann.

Im Falle von Strukturelementen mit fester Länge kann die Verpointerung entfallen. Die gewählte Länge muß hier entweder im Rahmen der Signalisierung ausgehandelt werden oder per Administration festgelegt werden. Die Festlegung der Länge der Strukturelemente muß immer in ganzzahligen Vielfachen von Oktetten erfolgen. Hierbei können spezielle Prozessor- oder Buseigenschaften berücksichtigt werden.

Das beschriebene Verfahren zeichnet sich dadurch aus, daß den einzelnen Strukturelementen keine Adressinformation mitgegeben werden muß. Synchronisationsmaßnahmen, die durch Rahmenverlust notwendig werden, können sich auf AAL-5-Mechanismen abstützen. Hierzu sind keine zusätzlichen Vereinbarungen notwendig, die die verwendeten Formate betreffen. Das Kennzeichnen der letzten Zelle eines Rahmens bei AAL5 genügt.

Es können sowohl Substrukturen flexibler Länge als auch fest eingestellte Substrukturen verwendet werden.

Innerhalb eines Rahmens können längs eines Weges zeitlich zueinander korrelierte Informationen, wie z.B. zusammengehörende Audio- und Videosignale, die in verschiedenen Kanälen übertragen werden, immer garantiert zeitgleich übertragen werden.

Neue Formate können definiert werden und dann per Signalisierung ausgehandelt werden, ohne daß in bestehende Verfahren eingegriffen werden müßte.

Zur Verdeutlichung des Umsetzens von Information höherer Schicht in Substrukturen eines AAL-5-Rahmens zeigt die

FIG einen AAL-5-Rahmen der Schicht zwei L2:AAL-5, bestehend aus vier ATM-Zellen, jeweils mit Header H und nicht im einzelnen gekennzeichnetem Payload-Teil. In diesen AAL-5-Rahmen werden Daten einer höheren Schicht L3:PDU1, L3:PDU2 und L3:PDU3 umgesetzt.

Das Umsetzen der Information L3:PDU1 führt hierbei zu einer äquidistanten Substruktur, das Umsetzen der Information L3:PDU2 führt zu einer variablen Substrukturierung, wobei die einzelnen Substrukturen größer sind als Zellenformate und das Umsetzen der Information L3:PDU3 führt zu einer variablen Substrukturierung, wobei die einzelnen Substrukturen kleiner sind als Zellenformate.

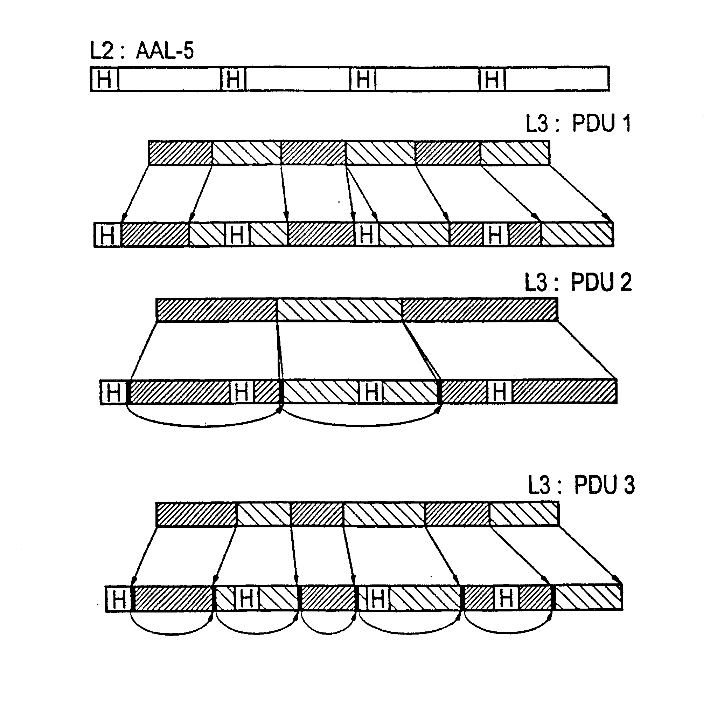

## Patentansprüche

1. Verfahren zum Übertragen von Nutzdaten, die unterschiedlichen Anwendungen zuordenbar sind, zwischen einer A-Seite und B-Seite einer Übertragungsstrecke, wobei vor der Datenübertragung zwischen der A-Seite und der B-Seite in einer Signalisierungsphase per Signalisierung eine ATM-Verbindung aufgebaut wird, wobei den einzelnen Anwendungen zugeordnete Daten jeweils innerhalb eines mehrere ATM-Zellen enthaltenden ATM-Anpassungsschichtrahmens in Substrukturen übertragen werden, die in den ATM-Zellen enthalten sind, und die Nutzdaten der Substrukturen jeweils abhängig von empfängerseitigen Anwendungszuordnungen unterschiedlich weiterleitbar sind,
**dadurch gekennzeichnet,**
**daß** die A-seitige und die B-seitige Zuordnung der Substrukturen eines ATM-Anpassungsrahmens nur im Rahmen der Verbindungsaufbauphase durch Übermittlung von Adreßinformationen der jeweiligen Substrukturen per Signalisierung festgelegt wird.

2. Verfahren nach Anspruch 1,
**dadurch gekennzeichnet,**
**daß** die Anzahl der ATM-Zellen, die ein ATM-Anpassungsschichtrahmen enthält, in der Signalisierungsphase per Signalisierung festgelegt wird.

3. Verfahren nach einem der vorhergehende Ansprüche,
**dadurch gekennzeichnet,**
**daß** in der Signalisierungsphase per Signalisierung festgelegt wird, ob die einzelnen Substrukturen gleich groß sind oder nicht.

4. Verfahren nach einem der Ansprüche 1 bis 3,
**dadurch gekennzeichnet,**
**daß** der Beginn der ersten Substruktur innerhalb eines Rahmen durch den Rahmenbeginn festgelegt ist.

5. Verfahren nach Anspruch 3,
**dadurch gekennzeichnet,**
**daß** im Falle unterschiedlich großer Substrukturen das erste Element jeder Substruktur die Länge des Substrukturelementes angibt dem es zugehört und damit, wann die nächste Substruktur beginnt.

6. Verfahren nach einem der vorhergehenden Ansprüche,
**dadurch gekennzeichnet,**
**daß** im Falle unterschiedlich großer Substrukturen die Länge eines Substrukturelementes durch den Wertebereich *l* eines Längenindikatorfeldes festgelegt ist.

7. Verfahren nach einem der vorhergehenden Ansprüche,
**dadurch gekennzeichnet,**
**daß** der ATM-Anpassungsschichtrahmen dem AAL-5-Rahmen gemäß ATM-Form entspricht.

8. Verfahren nach einem der vorhergehenden Ansprüche,
**dadurch gekennzeichnet,**
**daß** die Verbindung zwischen der A-Seite und der B-Seite bezüglich der Substrukturen eines ATM-Anpassungsschichtrahmens bidirektional ist.

9. Verfahren nach einem der Ansprüche 4 bis 8,
**dadurch gekennzeichnet,**
**daß** im Falle unterschiedlich großer Substrukturen, wenn innerhalb einer Substruktur keine Netzdaten zu übertragen sind, die Länge der Substruktur um den für Nutzdaten vorgesehenen Teil gekürzt wird.

10. Verfahren nach einem der vorhergehenden Ansprüche,
**dadurch gekennzeichnet,**
**daß** eine Substruktur sich über den Nutzdatenbereich zweier aneinander grenzender ATM-Zellen erstrecken kann und somit den Kopfinformationsbereich einer ATM-Zelle umschließt.

## Claims

1. Method for transmitting user data which can be allocated to different applications, between an A end and a B end of a transmission path, an ATM connection being established by signalling in a signalling phase before the transmission of data between the A and the B end, data which are allocated to the individual applications being transmitted in each case within an ATM adaptation layer frame containing a plurality of ATM cells, in substructures which are contained in the ATM cells, and it being possible to pass on the user data of the substructures in different ways depending in each case on receiver-end application allocations, **characterized in that** the A-end and the B-end allocations of the substructures of an ATM adaptation layer frame are defined by signalling only within the connection set-up phase by transmitting address information of the respective substructures.

2. Method according to Claim 1, **characterized in that** the number of ATM cells which an ATM adaptation layer frame contains is defined by signalling in the signalling phase.

3. Method according to one of the preceding claims, **characterized in that** whether or not the individual substructures are of equal magnitude is defined by signalling in the signalling phase.

4. Method according to one of Claims 1 to 3, **characterized in that** the start of the first substructure is defined within a frame by the start of the frame.

5. Method according to Claim 3, **characterized in that** in the case of substructures which are of different magnitudes, the first element of each substructure indicates the length of the substructure element to which it belongs, and thus indicates when the next substructure begins.

6. Method according to one of the preceding claims, **characterized in that**, in the case of substructures which are of different magnitudes, the length of a substructure element is defined by the value range *l* of a length indicator field.

7. Method according to one of the preceding claims, **characterized in that** the ATM adaptation layer frame corresponds to the AAL-5 frame in accordance with the ATM form.

8. Method according to one of the preceding claims, **characterized in that** the connection between the A end and the B end is bidirectional in terms of the substructures of an ATM adaptation layer frame.

9. Method according to one of Claims 4 to 8, **characterized in that**, in the case of substructures which are of different magnitudes, if no network data are to be transmitted within a substructure, the length of the substructure is shortened by the part which is provided for user data.

10. Method according to one of the preceding claims, **characterized in that** a substructure can extend over the user data area of two adjoining ATM cells, and thus includes the header information area of one ATM cell.

## Revendications

1. Procédé destiné à la transmission de données utiles, qui peuvent être attribuées à différentes applications, entre une extrémité A et une extrémité B d'une ligne de transmission, une liaison ATM (ou à mode de transfert asynchrone MTA) étant établie par signalisation avant la transmission des données entre l'extrémité A et l'extrémité B, au cours d'une phase de signalisation, des données affectées aux diverses applications étant transmises respectivement à l'intérieur d'une trame de la couche d'adaptation à l'ATM (ou MTA) contenant plusieurs cellules ATM, dans des structures secondaires, qui sont contenues dans les cellules ATM, et les données utiles des structures secondaires pouvant être retransmises différemment dans chaque cas en fonction des affectations aux applications du côté réception
**caractérisé par le fait**
**que** la correspondance côté A et côté B des structures secondaires d'une trame d'adaptation à l'ATM n'est définie par signalisation que dans le cadre de la phase d'établissement de la liaison grâce à la transmission d'informations d'adressage des structures secondaires respectives.

2. Procédé selon la revendication 1
**caractérisé par le fait**
**que** le nombre des cellules ATM, que renferme une trame d'adaptation à l'ATM, est défini par signalisation pendant la phase de signalisation.

3. Procédé selon l'une des revendications précédentes
**caractérisé par le fait**
**qu'**on définit par signalisation pendant la phase de signalisation si les différentes structures secondaires ont ou non la même longueur.

4. Procédé selon l'une des revendications 1 à 3
**caractérisé par le fait**
**que** le début de la première structure secondaire à l'intérieur d'une trame est défini par le début de la trame.

5. Procédé selon la revendication 3
**caractérisé par le fait**
**que**, dans le cas de structures secondaires de longueurs différentes, le premier élément de chaque structure secondaire indique la longueur de l'élément de la structure secondaire dont il fait partie et, ainsi, quand la structure secondaire suivante commence.

6. Procédé selon l'une des revendications précédentes
**caractérisé par le fait**
**que**, dans le cas de structures secondaires de longueurs différentes, la longueur d'un élément de structure secondaire est définie par la zone de valeurs *l* d'un champ indicateur de longueurs.

7. Procédé selon l'une des revendications précédentes
**caractérisé par le fait**
**que** la trame de la couche d'adaptation à l'ATM correspond à la trame AAL-5 conformément à la forme ATM.

8. Procédé selon l'une des revendications précédentes
**caractérisé par le fait**
**que** la liaison entre l'extrémité A et l'extrémité B, en ce qui concerne les structures secondaires d'une trame de la couche d'adaptation à l'ATM, est bidirectionnelle.

9. Procédé selon l'une des revendications 4 à 8
**caractérisé par l e fait**
que, dans le cas de structures secondaires de longueurs différentes, lorsque aucune donnée de réseau n'est transmise à l'intérieur d'une structure secondaire, la longueur de la structure secondaire est raccourcie de la partie prévue pour les données utiles.

10. Procédé salon l'une des revendications précédentes
**caractérisé par le fait**
**qu'**une structure secondaire peut s'étendre sur la zone de données utiles de deux cellules ATM qui se touchent et, ainsi, comprend la zone d'information d'en-tête d'une cellule ATM.
